# EUROPEAN PATENT APPLICATION

(11) **EP 4 807 198 A1**
(43) Date of publication of application: **16.09.2026**
(21) Application number: 25217034.5
(22) Date of filing: 19.11.2025
(51) Int. Cl.: F16B 7/04, F16B 3/00, F16B 5/06

(54) **FASTENING DEVICE**

(30) Priority: 13.03.2025 TW 114109337
(71) Applicant: Jing-Xin Solar Ltd., Tainan City 709029 (TW)
(72) Inventor: YANG, Ching-Lung, TAINAN CITY (TW)
(74) Representative: Lermer, Christoph

(57) **Abstract**

A fastening device is provided. The fastening device includes a first sliding slot 14 and a second sliding slot 15 respectively arranged at an upper end and a lower end of a main body 1 for slidable assembly with two third steel plates 63 at upper and lower ends of a notch 64 of a supporting steel beam 6 correspondingly. Thereby assembly of the fastening device with the supporting steel beam 6 is convenient and on-site construction efficiency is improved. While mounting solar panels 7 on the supporting steel beams 6, the fastening devices are sliding along the supporting steel beam 6 according to sizes of the solar panels 7 for assembly of the solar panels 7 and convenience of on-site construction. Moreover, there is no need to drill holes on the supporting steel beams 6 for assembly with the fastening devices. Thus structural strength and durability are effectively increased.

## Description

### Field of the Invention

The present invention relates to a fastening device, especially to a fastening device for fixing panels, sheets, and hanging objects.

### Description of Related Art

Refer to Taiwanese Pub. No. M559551, a fixing member for solar panel modules is provided. A plurality of long holes disposed on supporting steels reduces structural strength of the supporting steels. During assembly, a plurality of bolts is inserted through washers, fixing plates, and the long holes of the supporting steels to be fastened tightly by nuts. This is time-consuming and the assembly is not convenient. Moreover, positions of the long holes are fixed so that assembly positions are unable to be changed according to sizes of the solar panels. This causes problems to on-site construction. Also refer to Taiwanese Pat. Pub. No. M478075, a hollow tube is provided. Although strength of the hollow tube is increased by grooves disposed on two sides of the hollow tube. However, production cost of such tube is high. The tube also needs to be provided with insertion holes allowing screws to insert through for fastening fixed sliders on the tube. The on-site construction still has problems of time consumption and inconvenience. The insertion holes of the tube are unable to match with the solar panels with different sizes and this is a shortcoming of the on-site construction.

### SUMMARY OF THE INVENTION

Therefore, it is a primary object of the present invention to provide a fastening device which is able to be assembled with supporting steel beams and solar panels conveniently for improving on-site construction efficiency and convenience of assembly.

In order to achieve the above object, a fastening device according to the present invention includes a sliding slot disposed on both an upper and a lower end of a main body for slidable assembly with a third steel plate arranged at both an upper end and a lower end of a notch of a supporting steel beam correspondingly. Thereby assembly of the fastening device with the supporting steel beam is convenient and on-site construction efficiency is improved. Moreover, while mounting solar panels on the supporting steel beams, the present fastening devices can be sliding along the supporting steel beam to positions suitable for assembling the solar panels according to sizes of the solar panels. This makes on-site construction become more convenient. Moreover, while assembling the fastening devices with the supporting steel beams, there is no need to drill holes on the supporting steel beams. Thus structural strength and durability of the supporting steel beams are effectively increased.

### BRIEF DESCRIPTION OF THE DRAWINGS

Fig. 1 is an exploded view of an embodiment according to the present invention;
Fig. 2 is a side view of an embodiment according to the present invention;
Fig. 3 is a schematic drawing showing an embodiment in use according to the present invention;
Fig. 4 is another schematic drawing showing an embodiment in use according to the present invention;
Fig. 5 is a further schematic drawing showing an embodiment in use according to the present invention;
Fig. 6 is a further schematic drawing showing an embodiment in use according to the present invention;
Fig. 7 is a further schematic drawing showing an embodiment in use according to the present invention;
Fig. 8 is a further schematic drawing showing an embodiment in use according to the present invention;
Fig. 9 is a further schematic drawing showing an embodiment in use according to the present invention;
Fig. 10 is a further schematic drawing showing an embodiment in use according to the present invention.

### DETAILED DESCRIPTION OF THE PREFERRED EMBODIMENT

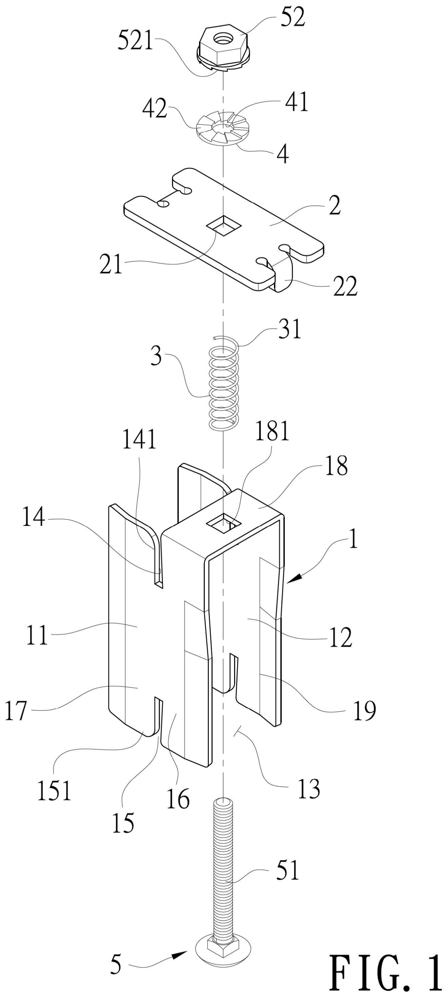

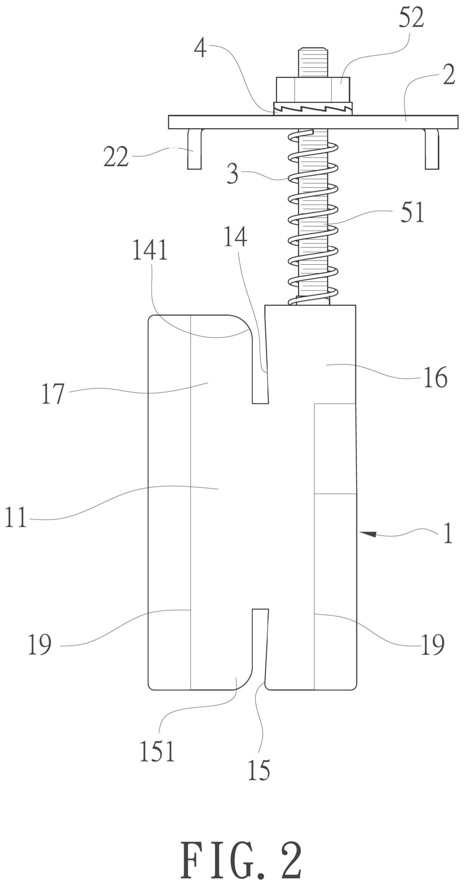

Refer to Fig. 1 and Fig. 2, a fastening device according to the present invention mainly includes a main body 1, a positioning plate 2, an elastic member 3, a washer 4, and a fastening member 5.

The main body 1 is n-shaped and composed of a first plate 11 and a second plate 12 arranged opposite and parallel to each other, an interval 13 formed between the first plate 11 and the second plate 12, two first sliding slots 14, two second sliding slots 15, two first areas 16, two second areas 17, a third plate 18, and two reinforcement portions 19. Both the first plate 11 and the second plate 12 have a first end and a second end opposite to the first end. In the first plate 11 and the second plate 12, the first sliding slot 14 is disposed on the first end and extending toward the second end with a length of about 20-25 mm. The first sliding slot 14 includes a slot opening and a slot bottom opposite to each other. A width of the slot opening of the first sliding slot 14 located at the first end of both the first plate 11 and the second plate 12 is smaller than a width of the slot bottom of the first sliding slot 14 so that the first sliding slot 14 is tapered from the slot bottom to the slot opening. A fillet 141 is disposed on one side of the slot opening of the first sliding slot 14. The second end of both the first plate 11 and the second plate 12 is provided with the second sliding slot 15 arranged at the second end and extending toward the first end and having a length of about 20-25 mm. The second sliding slot 15 includes a slot opening and a slot bottom opposite to each other. A width of the slot opening of the second sliding slot 15 located at the second end of both the first plate 11 and the second plate 12 is smaller than a width of the slot opening of the second sliding slot 15 so that the second sliding slot 15 is tapered from the slot bottom to the slot opening. A fillet 151 is disposed on one side of the slot opening of the second sliding slot 15. The first sliding slot 14 and the second sliding slot 15 are disposed correspondingly to each other. Both the first plate 11 and the second plate 12 are divided into the first area 16 and the second area 17 by the first sliding slot 14 and the second sliding slot 15. The third plate 18 is disposed on the first ends of both the first and the second plates 11, 12 and located at the first areas 16. Two sides of the third plate 18 are connected to the first end of the first plate 11 located at the first area 16 and the first end of the second plate 12 located at the first area 16 correspondingly to form one part. Thus there is a height difference of about 1.2-1.5 mm between the first end at the first area 16 and the first end at the second area 17 of both the first plate 11 and the second plate 12. The third plate 18 is provided with a first insertion hole 181. A lateral side of the first area 16 and a lateral side of the second area 17 of both the first and the second plates 11, 12 are bent about 10 degrees toward the interval 13 between the first plate 11 and the second plate 12. The reinforcement portions 19 is formed at bent area.

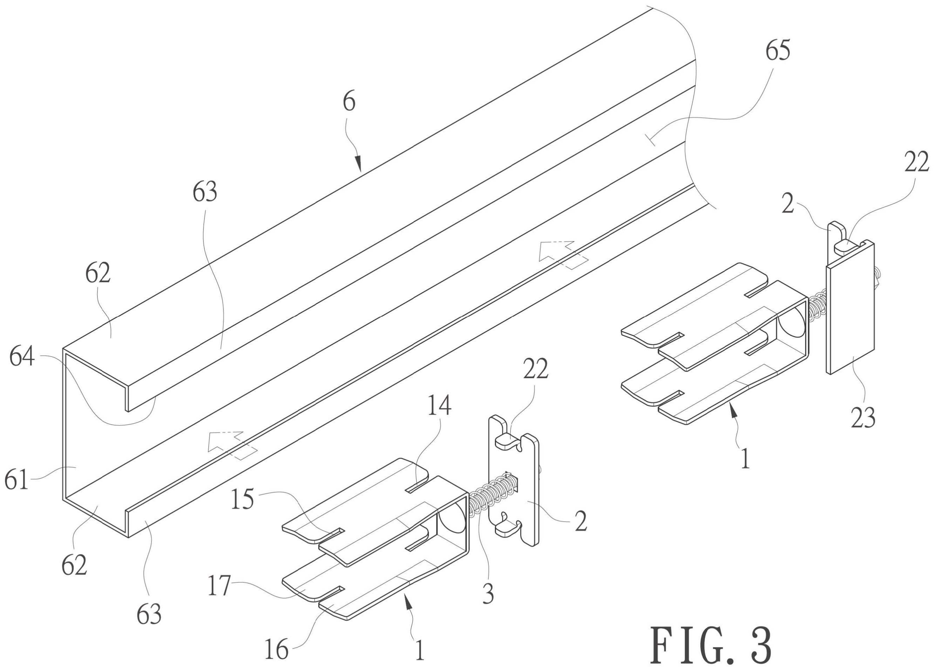

The positioning plate 2 is located at one side of the third plate 18 of the main body 1 and a distance is formed between the positioning plate 2 and the third plate 18 of the main body 1. The positioning plate 2 is provided with a second insertion hole 21 and two separation portions 22. The second insertion hole 21 is corresponding to the first insertion hole 181 of the third plate 18 of the main body 1 and each of the separation portions 22 is formed by bending of a middle part at two ends of the positioning plate 2 opposite to each other. According to user's needs, the positioning plate 2 is further provided with a stopping piece 23 arranged vertically and connected to one side of the positioning plate 2 (as shown in Fig. 3).

The elastic member 3 which is a compression spring is arranged between the third plate 18 of the main body 1 and the positioning plate 2. Two ends of the elastic member 3 are abutting against the third plate 18 of the main body 1 and the positioning plate 2 correspondingly. A through hole 31 is mounted at a center of the elastic member 3 and aligned with the first insertion hole 181 of the third plate 18 of the main body 1 and the second insertion hole 21 of the positioning plate 2.

The washer 4 is disposed on the positioning plate 2 and provided with a central hole 41 corresponding to the second insertion hole 21 of the positioning plate 2 and a plurality of first unidirectional ratchet teeth 42 formed on a surface at one end of the washer 4. The other surface of the washer 4 is abutting against and in contact with the positioning plate 2.

The fastening member 5 consists of a bolt 51 and a nut 52. The bolt 51 is inserted through the first insertion hole 181 of the main body 1, the through hole 31 of the elastic member 3, the second insertion hole 21 of the positioning plate 2, and the central hole 41 of the washer 4 in turn and protruding from one end of the central hole 41 of the washer 4 to be threaded in and engaged with the nut 52. A plurality of second unidirectional ratchet teeth 521 is formed on a surface at one end of the nut 52 and able to be engaged with the plurality of the first unidirectional ratchet teeth 42 of the washer 4.

Also refer to Fig. 3, a plurality of fastening devices of the present invention is used in combination with at least one supporting steel beam 6 which is a C channel steel for fixing at least one solar panel 7. The supporting steel beam 6 consists of a vertically-arranged first steel plate 61, two second steel plates 62 disposed horizontally and having one side connected to an upper end and a lower end of the first steel plate 61 correspondingly, two third steel plates 63 connected to the other side of the two second steel plates 62 correspondingly and extending toward each other, a notch 64 formed between the two third steel plates 63, and a hollow space 65 surrounded by the first steel plate 61, the two second steel plates 62, and the two third steel plates 63. The notch 64 and the hollow space 65 are communicating with each other.

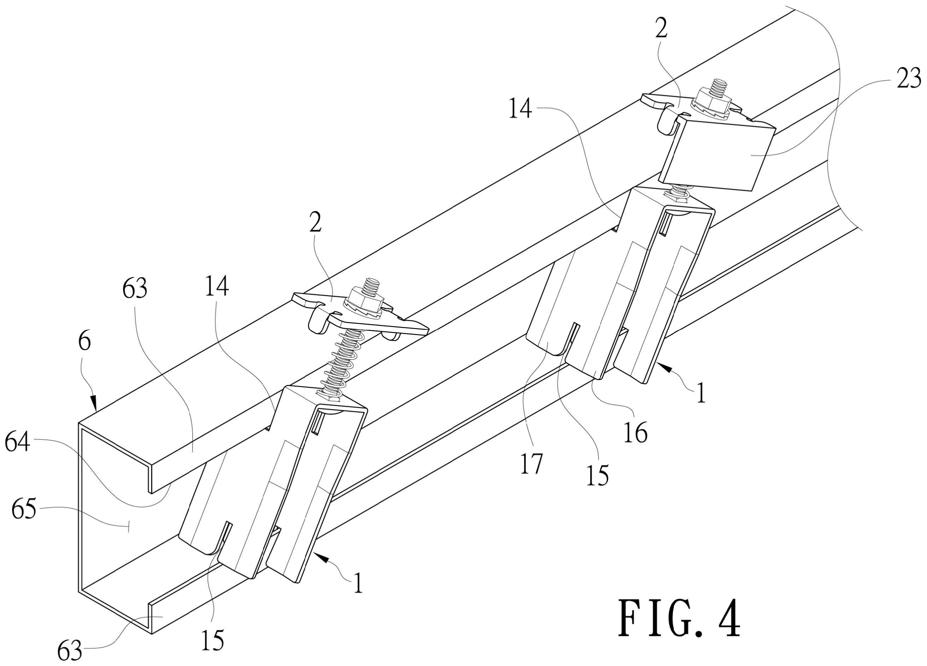

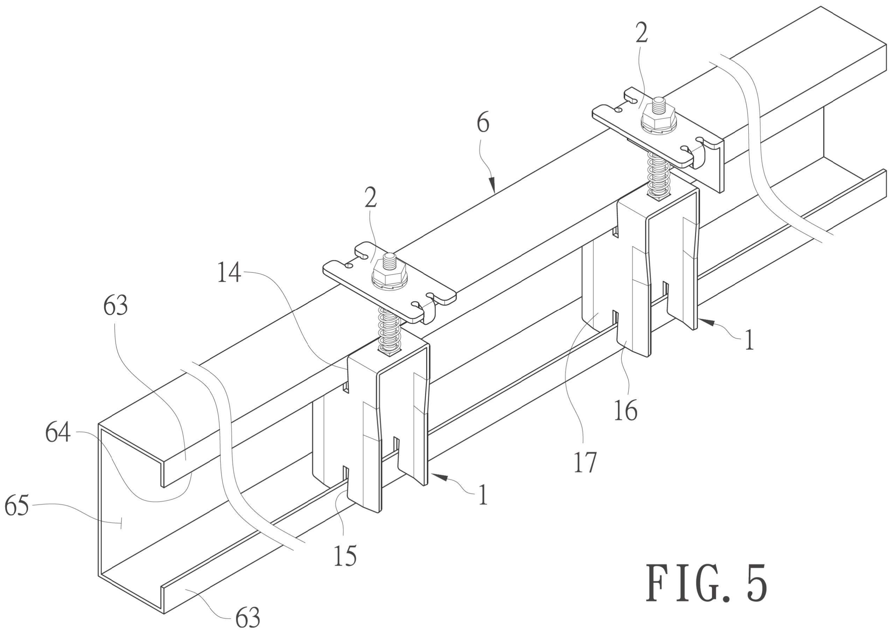

While in use, the present fastening device is set horizontally for mounting the second area 17 of the main body 1 into the hollow space 65 of the supporting steel beam 6 through the notch 64 of the supporting steel beam 6. Also refer to Fig. 4, then the present fastening device is rotated an angle. At the moment, the two third steel plates 63 of the supporting steel beam 6 are smoothly introduced into the first sliding slot 14 and the second sliding slot 15 of the main body 1 under guidance of tapered design of the first and the second sliding slots 14, 15 and the fillets 141, 151 on the slot openings of the first and the second sliding slots 14, 15 correspondingly. Also refer to Fig. 5, later the present fastening device is turned to be arranged vertically. Thus the two third steel plates 63 of the supporting steel beam 6 are completely mounted into the first sliding slot 14 and the second sliding slot 15 of the main body 1 correspondingly. Thereby the assembly of the present fastening device with the supporting steel beam 6 is completed on site easily and conveniently.

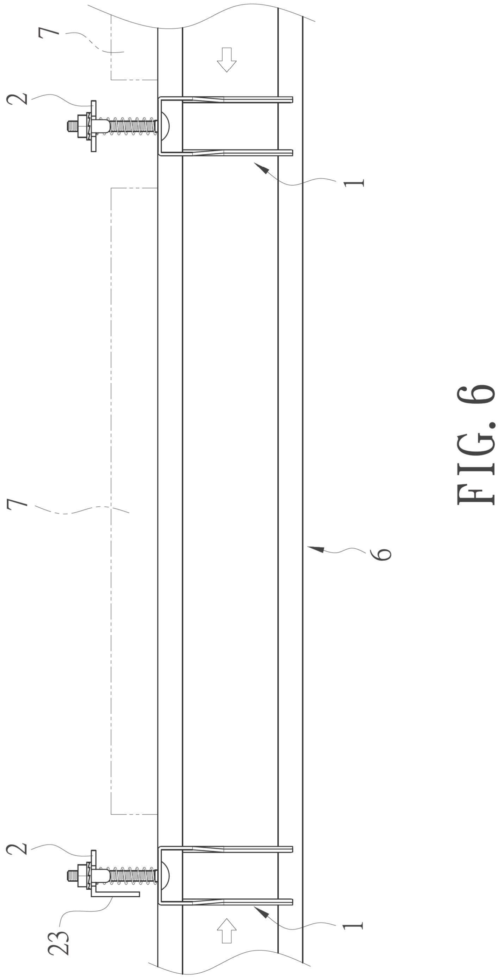

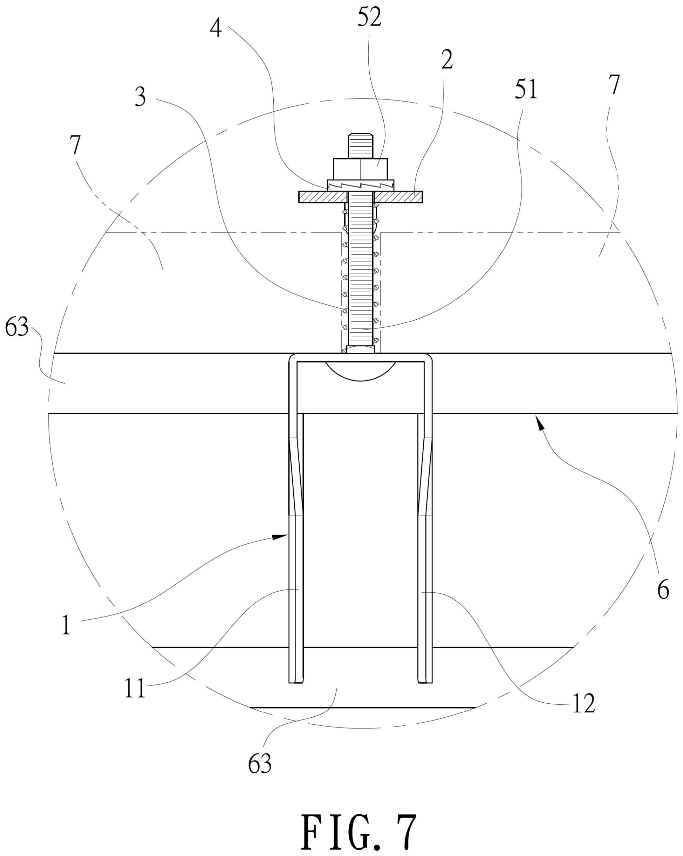

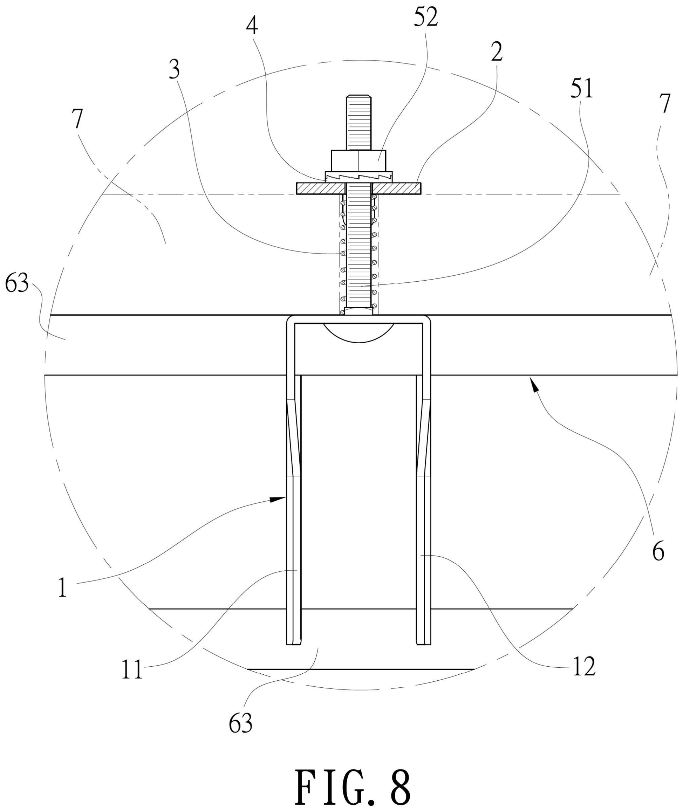

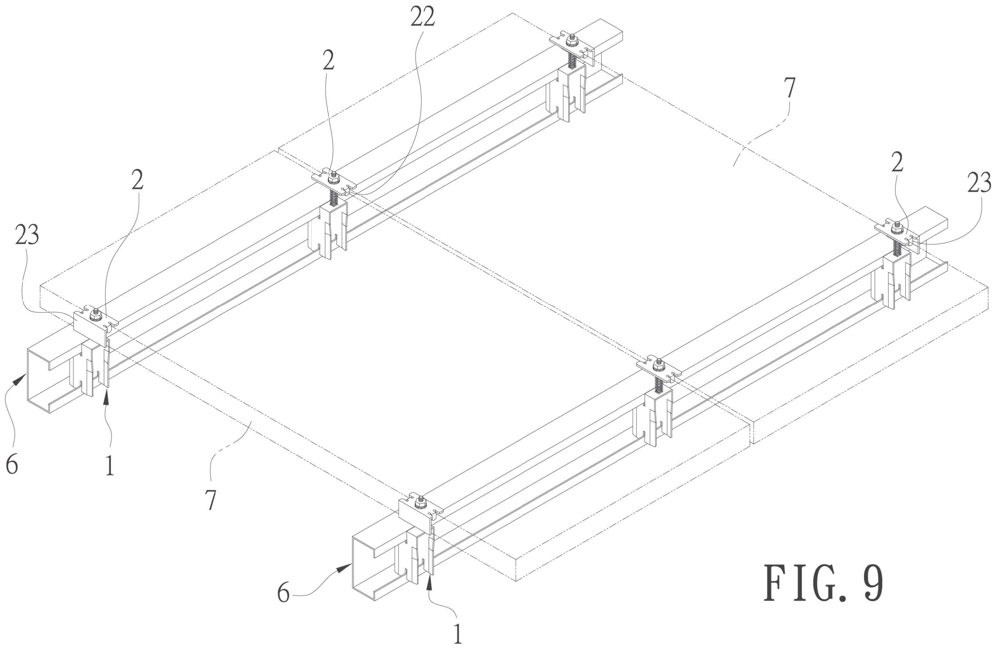

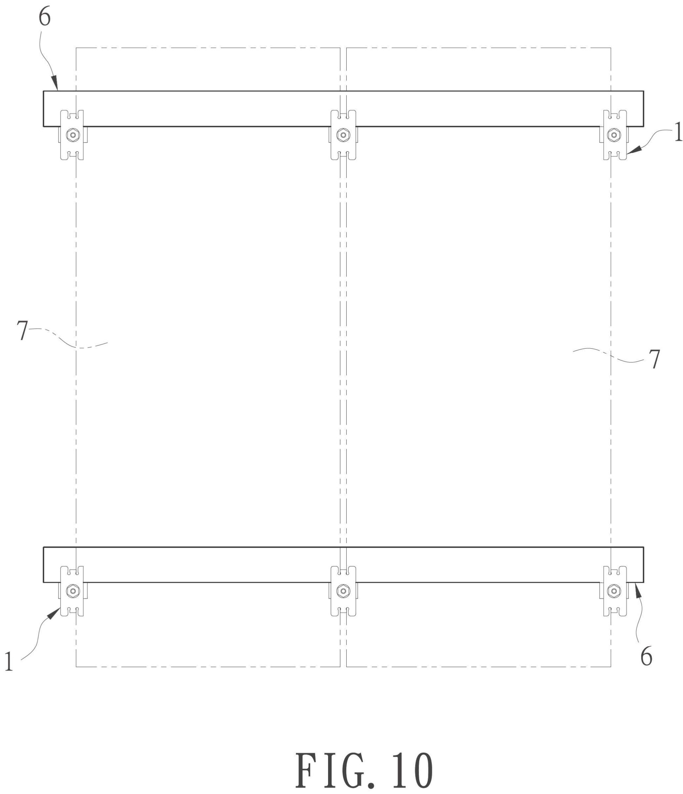

According to the assembly way mentioned above, at least three fastening devices are disposed on each of the two supporting steel beams 6 arranged opposite to each other and two of the three fastening devices located at two sides of the supporting steel beams 6 are both provided with the positioning plate 2 having the stopping piece 23. Also refer to Fig. 6 and Fig. 9, at least two solar panels 7 are arranged at the two supporting steel beams 6. In order to fix the solar panels 7 with different sizes, the first sliding slot 14 and the second sliding slot 15 of the main body 1 are slidable on each of the two third steel plates 63 of the supporting steel beam 6. Also refer to Fig. 7, a plurality of the present fastening devices is moved to positions between the two solar panels 7. The fastening devices with the posit positioning plate 2 having the stopping piece 23 are moved to an outer side of each of the two solar panels 7. Also refer to Fig. 8, keep rotating the nut 52 of the present fastening device so that the nut 52 is moved along the bolt 51 to abut against the positioning plate 2 through the washer 4. Thus the positioning plate 2 is pressing against the solar panel 7 for holding the solar panel 7 between the positioning plate 2 and the supporting steel beams 6 firmly. After the nut 52 being tightened and positioned, the engagement design between the second unidirectional ratchet teeth 521 of the nut 52 and the first unidirectional ratchet teeth 42 of the washer 4 effectively prevents loosening of the nut 52 caused by vibration or other factors. Also refer to Fig. 9 and Fig. 10, after the positioning plate 2 being tightened and positioned, the two solar panels 7 are separated from each other by a gap formed due to arrangement of the separation portions 22 between the two ends of the positioning plate 2 which is arranged between the two solar panels 7. The gap is used for prevent collisions between the two solar panels 7 caused by thermal expansion and contraction. As to the two fastening devices located at the outer side of the two solar panels 7 correspondingly, a side surface of the solar panel 7 is stopped and protected by the stopping piece 23 at the side of the positioning plate 2.

Besides fixing panels such as the solar panel 7 or sheets, the present fastening device can also be used in combination with light steel frames for ceiling. The present fastening devices are hanging upside down from the ceiling and objects are hung on the positioning plate 2. While in use, the elastic member 3 and the washer 4 can be omitted. When there is no washer 4 provided, the nut 52 is directly threaded on the positioning plate 2.

According to the above embodiment, the present fastening device has the following advantages.
1. In the present fastening device, the upper and the lower end of the main body are respectively provided with the first sliding slot and the second sliding slot for slidable assembly with the two third steel plates at the upper end and the lower end of the notch of the supporting steel beam correspondingly. Thereby assembly of the fastening device with the supporting steel beam is completed on site conveniently. The on-site construction efficiency is significantly increased.
2. In the present fastening device, the two ends of the main body are provided with the first sliding slot and the second sliding slot for slidable assembly with the two third steel plates at the two ends of the notch of the supporting steel beam correspondingly. Thus the fastening devices can be sliding along the supporting steel beam lengthwise to positions required according to sizes of the solar panels for the following assembly and fixing of the solar panels. Thereby the convenience of on-site construction is further improved.
3. In the present fastening device, the two ends of the main body are provided with the first sliding slot and the second sliding slot for slidable assembly with the two third steel plates at the two ends of the notch of the supporting steel beam correspondingly. Thereby there is no need to drill holes on the supporting steel beams and this helps maintain structural strength and durability of the supporting steel beams.
4. The first plate and the second plate of the present fastening device are bent at certain positions to increase structural strength of the first plate and the second plate. After the fastening devices being mounted into the hollow space of the supporting steel beam, load strength of the supporting steel beam is increased.
5. By the tapered design of the first and the second sliding slots and under guidance of the fillets at the slot openings, the two third steel plates of the supporting steel beam are smoothly introduced into the first sliding slot and the second sliding slot of the main body correspondingly. The convenience of assembly of the present fastening device with the supporting steel beam is further improved.
6. The nut and the washer of the present fastening device are both provided with unidirectional ratchet teeth. The engagement between the unidirectional ratchet teeth of the washer and the unidirectional ratchet teeth of the nut effectively prevents loosening of the nut caused by vibrations or other factors.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalent.

## Claims

1. A fastening device comprising:
a main body 1 provided with a first plate 11 and a second plate 12 arranged opposite and parallel to each other and both having a first end and a second end opposite to the first end, an interval 13 formed between the first plate 11 and the second plate 12, two first sliding slots 14 arranged at the first ends and extending toward the second ends of the first and the second plates 11, 12 correspondingly, two second sliding slots 15 disposed on the second ends and extending toward the first ends of the first and the second plates 11, 12 correspondingly, two first areas 16, two second areas 17, and a third plate 18; both the first plate 11 and the second plate 12 being divided into the first area 16 and the second area 17 by the first sliding slot 14 and the second sliding slot 15;
the plate 18 disposed on the first ends of the first and the second plates 11, 12 and located at the first areas 16; two sides of the third plate 18 connected to the first end of the first plate 11 located at the first area 16 and the first end of the second plate 12 located at the first area 16; the third plate 18 provided with a first insertion hole 181;
a positioning plate 2 located at one side of the third plate 18 of the main body 1 and provided with a second insertion hole 21 corresponding to the first insertion hole 181 of the third plate 18 of the main body 1; and
a fastening member 5 having a bolt 51 inserted through the first insertion hole 181 of the main body 1 and the second insertion hole 21 of the positioning plate 2 to be threaded in and engaged with a nut 52.

2. The fastening device as claimed in claim 1, wherein the first sliding slot 14 of both the first and the second plates 11, 12 of the main body 1 includes a slot opening and a slot bottom opposite to each other; the slot opening of the first sliding slot 14 of the first plate 11 is located at the first end of the first plate 11 and the slot opening of the first sliding slot 14 of the second plate 12 is located at the first end of the second plate 12; a width of the slot opening of the first sliding slot 14 of both the first and the second plates 11, 12 is smaller than a width of the slot bottom of the first sliding slot 14 of both the first and the second plates 11, 12 so that the first sliding slot 14 is tapered; a fillet 141 is disposed on one side of the slot opening of the first sliding slot 14.

3. The fastening device as claimed in claim 1, wherein the second sliding slot 15 of both the second and the second plates 11, 12 of the main body 1 includes a slot opening and a slot bottom opposite to each other; the slot opening of the second sliding slot 15 of the first plate 11 is located at the second end of the first plate 11 and the slot opening of the second sliding slot 15 of the second plate 12 is located at the second end of the second plate 12; a width of the slot opening of the second sliding slot 15 of both the second and the second plates 11, 12 is smaller than a width of the slot bottom of the second sliding slot 15 of both the second and the second plates 11, 12 so that the second sliding slot 15 is tapered; a fillet 151 is disposed on one side of the slot opening of the second sliding slot 15.

4. The fastening device as claimed in claim 1, wherein the plate 18 of the main body 1 is connected to the first ends of both the first and the second plates 11, 12 located at the first area 16; a height difference is formed between the first end at the first area 16 of both the first plate 11 and the second plate 12 and the first end at the second area 17 of both the first plate 11 and the second plate 12.

5. The fastening device as claimed in claim 1, wherein a lateral side of the first area 16 and a lateral side of the second area 17 of both the first plate 11 and the second plate 12 are bent toward an interval 13 between the first plate 11 and the second plate 12; a reinforcement portions 19 is formed at bent area.

6. The fastening device as claimed in claim 1, wherein a separation portion 22 is formed by bending of each of two opposite ends of the positioning plate 2.

7. The fastening device as claimed in claim 1, wherein a stopping piece 23 is connected to one side of the positioning plate 2.

8. The fastening device as claimed in claim 1, wherein the fastening device further includes an elastic member 3 which is located between the third plate 18 of the main body 1 and the positioning plate 2; two ends of the elastic member 3 are abutting against the third plate 18 of the main body 1 and the positioning plate 2 correspondingly; a through hole 31 is mounted at a center of the elastic member 3 and aligned with the first insertion hole 181 of the third plate 18 of the main body 1 and the second insertion hole 21 of the positioning plate 2; the bolt 51 of the fastening member 5 is inserted through the first insertion hole 181 of the main body 1, the through hole 31 of the elastic member 3, and the second insertion hole 21 of the positioning plate 2 to be threaded in and engaged with the nut 52.

9. The fastening device as claimed in claim 1, wherein the fastening device further includes a washer 4 which is located between the positioning plate 2 and the nut 52 of the fastening member 5; the washer 4 is provided with a central hole 41 corresponding to the second insertion hole 21 of the positioning plate 2; the bolt 51 of the fastening member 5 is inserted through the first insertion hole 181 of the main body 1, the second insertion hole 21 of the positioning plate 2, and the central hole 41 of the washer 4 to be threaded to and engaged with the nut 52.

10. The fastening device as claimed in claim 9, wherein a plurality of first unidirectional ratchet teeth 42 is formed on a surface at one end of the washer 4 facing the nut 52; a plurality of second unidirectional ratchet teeth 521 is formed on a surface at one end of the nut 52 and able to be engaged with the plurality of the first unidirectional ratchet teeth 42 of the washer 4.
